(19) Europäisches Patentamt / European Patent Office / Office européen des brevets

(11) **EP 3 982 334 A1**

(12) **DEMANDE DE BREVET EUROPEEN**

(43) Date de publication:
**13.04.2022 Bulletin 2022/15**

(21) Numéro de dépôt: **21201607.5**

(22) Date de dépôt: **08.10.2021**

(51) Classification Internationale des Brevets (IPC):
**G06V 20/69** *(2022.01)* **G01N 15/14** *(2006.01)*
**G01N 15/10** *(2006.01)*

(52) Classification Coopérative des Brevets (CPC):
**G01N 15/1434; G01N 15/1429; G01N 15/1463;**
**G06V 10/82; G06V 20/69;** G01N 2015/1006;
G01N 2015/1454

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**
Etats d'extension désignés:
**BA ME**
Etats de validation désignés:
**KH MA MD TN**

(30) Priorité: **09.10.2020 FR 2010375**

(71) Demandeur: **Commissariat à l'énergie atomique**
**et aux énergies alternatives**
**75015 Paris (FR)**

(72) Inventeurs:
• **CIONI, Olivier**
 **38054 GRENOBLE cedex 09 (FR)**
• **BORDY, Thomas**
 **38054 GRENOBLE cedex 09 (FR)**
• **DEFORCEVILLE, Camille**
 **38054 GRENOBLE cedex 09 (FR)**
• **PAULUS, Caroline**
 **38054 GRENOBLE cedex 09 (FR)**

(74) Mandataire: **INNOV-GROUP**
 **310, avenue Berthelot**
 **69372 Lyon Cedex 08 (FR)**

(54) **PROCÉDÉ DE CARACTÉRISATION DE MICROORGANISMES**

(57) Procédé de caractérisation d'un échantillon, comportant des microorganismes disposés au contact d'un milieu propice à leur développement, le procédé comportant les étapes suivantes:
a) illumination de l'échantillon (10) par une source de lumière (11);
b) à l'aide d'un capteur d'image (16), obtention d'au moins une image de l'échantillon ($I_i$), représentant l'échantillon à un instant de mesure ($t_i$) ;
c) détection d'une particule, susceptible d'être un microorganisme ($10_j$), sur l'image de l'échantillon, et détermination d'une position ($x_i$, $y_j$) de la particule dans l'image de l'échantillon.
d) définition d'une région d'intérêt ($ROI_{i,j}$) dans l'image de l'échantillon, s'étendant autour de la position ($x_i$, $y_j$) de la particule déterminée lors de l'étape c) ;
e) formation d'une vignette ($V_{i,j}$), correspondant à une partie de l'image de l'échantillon dans la région d'intérêt résultant de d) ;
f) utilisation de la vignette formée dans e) en tant que donnée d'entrée d'un algorithme d'intelligence artificielle supervisé ;
g) à partir de l'algorithme d'intelligence artificielle supervisé, détermination de l'appartenance de la particule à une classe de viabilité, la classe de viabilité rassemblant chaque microorganisme se développant dans l'échantillon. Figure d'abrégé - figure 2B

**Fig. 2B**

**Description**

**DOMAINE TECHNIQUE**

Le domaine technique de l'invention est la caractérisation de microorganismes, notamment la caractérisation de levures ou de bactéries.

**ART ANTERIEUR**

L'utilisation de microorganismes tels des levures ou des bactéries, ou leurs dérivés, trouve de nombreuses applications dans de nombreux domaines. Dans le domaine de l'agroalimentaire, par exemple, l'utilisation de levures est répandue dans différents secteurs, tels la boulangerie, la production de vin, la brasserie ou encore la fabrication de produits laitiers. L'application de levures ou de bactéries concerne de nombreux aliments par le biais de probiotiques, ces derniers étant par exemple ajoutés à des céréales ou à des aliments pour animaux. En dehors de l'agroalimentaire, de nombreux domaines industriels peuvent mettre en œuvre des microorganismes. Il s'agit par exemple de l'agriculture ou de l'horticulture, avec le développement de produits phytosanitaires ou de fertilisants plus respectueux de l'environnement, ou encore de la production de biocombustibles obtenus à partir de végétaux. D'autres applications concernent le domaine de la pharmacie, du diagnostic médical

A des fins de contrôle qualité, l'étape de caractérisation de tels microorganismes constitue un maillon essentiel de la chaîne de production. Des contrôles microbiologiques sont fréquemment utilisés, sur des échantillons prélevés dans des milieux de culture, de façon à détecter et dénombrer les microorganismes vivants. La mise en culture sur des boîtes de Pétri est toujours très utilisée, mais comporte certains inconvénients, en particulier la préparation, la durée de l'analyse et l'impossibilité de détecter des microorganismes vivants et non cultivables.

Le document WO2018/215337 décrit un dispositif et un procédé permettant d'effectuer une classification entre les levures vivantes, mortes ou vivantes mais non cultivables. Le document EP3462381 décrit un dispositif et un procédé permettant de détecter des microorganismes dans un échantillon alimentaire.

Les documents US2019/0294108 et WO2020/102546 décrivent le recours à des réseaux de neurones pour obtenir une représentation de l'échantillon à partir d'une image acquise selon une configuration d'imagerie sans lentille. Le document WO2020/082030 décrit un procédé pour caractériser la mobilité de particules.

La publication "Early-detection and classification of live bacteria using time-lapse coherent imaging and deep learning" décrit le recours à un reseau de neurones pour détecter un développement bactérien. Le réseau de neurones est alimenté par une série de deux vignettes, établies sur la base de 4 images acquises toutes les 30 minutes. Ainsi, les données d'entrée du réseau de neurones comportent 8 vignettes, ce qui constitue un nombre de données d'entrée importants.

Les inventeurs proposent une méthode alternative, nécessitant peu de données d'entrée, de façon à effectuer un dénombrement de microorganismes vivants, et se développant, dans un échantillon.

**EXPOSE DE L'INVENTION EXPOSE DE L'INVENTION**

Un premier objet de l'invention est un procédé de caractérisation d'un échantillon, comportant des microorganismes disposés au contact d'un milieu propice à leur développement, le procédé comportant les étapes suivantes :

a) illumination de l'échantillon par une source de lumière;
b) à l'aide d'un capteur d'image, obtention d'au moins une image de l'échantillon, représentant l'échantillon à un instant de mesure;
c) détection d'une particule, susceptible d'être un microorganisme, sur l'image de l'échantillon, et détermination d'une position de la particule dans l'image de l'échantillon.
d) définition d'une région d'intérêt dans l'image de l'échantillon, s'étendant autour de la position de la particule détectée lors de l'étape c) ;
e) formation d'une vignette correspondant à une partie de l'image de l'échantillon dans la région d'intérêt définie lors de l'étape d) ;
f) utilisation de la vignette formée dans l'étape e) en tant que donnée d'entrée d'un algorithme d'intelligence artificielle supervisé ;
g) à partir de l'algorithme d'intelligence artificielle supervisé, détermination de l'appartenance ou de la non appartenance de la particule à une classe rassemblant chaque microorganisme se développant dans l'échantillon.

Lors de l'étape d), la région d'intérêt peut être centrée par rapport à la position déterminée lors de l'étape c). D'une façon plus générale, dans l'étape d), la position de la particule, dans la région d'intérêt, est prédéterminée.

De préférence, l'étape c) comporte une détection de plusieurs particules, les étapes d) à g) étant mises en œuvre pour chaque particule détectée. Le procédé permet ainsi d'estimer une quantité de microorganismes se développant dans l'échantillon.

Selon un mode de réalisation,

- l'étape b) comporte une obtention de plusieurs images de l'échantillon, respectivement à différents instants de mesure ;
- les étapes c) à e) sont mises en œuvre pour chaque image de l'échantillon, de façon à obtenir, pour une même particule, une série de vignettes respectivement formées à partir des images de l'échantillon obtenues lors de l'étape b) ;
- lors de l'étape f), la série de vignettes correspondant à une même particule est utilisée en tant que donnée d'entrée de l'algorithme d'intelligence artificielle supervisé.

Selon une possibilité :

- l'étape b) comporte une obtention d'au moins deux images de l'échantillon, ou d'uniquement deux images, à deux instants de mesure espacés d'un intervalle temporel compris entre 1 heure et 10 heures ;
- lors de l'étape f), on utilise une série d'au moins deux vignettes, ou uniquement deux vignettes, en tant que donnée d'entrée de l'algorithme d'intelligence artificielle supervisé.

L'échantillon peut être disposé entre la source de lumière et le capteur d'image.

Selon un mode de réalisation, aucune optique de formation d'image n'est disposé entre l'échantillon et le capteur d'image. Le capteur d'image acquiert alors une image selon une configuration dite d'imagerie sans lentille.

Selon un autre mode de réalisation, un système optique s'étend entre l'échantillon et le capteur d'image, le système optique définissant un plan objet et un plan image, le procédé étant tel que:

- le capteur d'image définit un plan de détection, le plan de détection étant décalé par rapport au plan image;
- et/ou l'échantillon définit un plan d'échantillon, le plan d'échantillon étant décalé par rapport au plan objet.

Le capteur d'image acquiert alors une image selon une configuration dite défocalisée.

Selon un mode de réalisation, l'étape b) comporte, à chaque instant de mesure :

- b-i) acquisition d'une image par le capteur d'image à l'instant de mesure ;
- b-ii) application d'un opérateur de reconstruction holographique à l'image acquise de façon à obtenir une image complexe dans un plan de reconstruction ;
- b-iii) obtention de l'image de l'échantillon, à l'instant de mesure, à partir de l'image complexe résultant de la sous-étape b-ii).

L'image de l'échantillon peut être obtenue à partir du module ou de la phase ou de la partie réelle ou de la partie imaginaire de l'image complexe obtenue au cours de la sous-étape b-ii). L'algorithme d'intelligence artificielle supervisé est un réseau de neurones, notamment un réseau de neurones convolutif.

Un deuxième objet de l'invention est un dispositif de caractérisation d'un échantillon, l'échantillon comportant des microorganismes, le dispositif comportant :

- une source de lumière ;
- un capteur d'image ;
- un support, configuré pour maintenir l'échantillon ;
- un processeur, programmé pour mettre en œuvre les étapes c) à g) du premier objet de l'invention.

L'invention sera mieux comprise à la lecture de l'exposé des exemples de réalisation présentés, dans la suite de la description, en lien avec les figures listées ci-dessous.

**FIGURES**

La figure 1 schématise un dispositif permettant une mise en œuvre de l'invention.
La figure 2A montre une série de vignettes centrées sur une levure ne se développant pas.

La figure 2B montre une série de vignettes centrées sur une levure se développant.

La figure 2C est une série de deux vignettes pouvant former une donnée d'entrée d'un algorithme d'intelligence artificielle supervisé.

La figure 3A présente les principales étapes d'un procédé objet de l'invention.

La figure 3B est un exemple d'image d'un échantillon comportant des levures.

La figure 3C représente l'image de la figure 3B après binarisation.

La figure 3D représente un exemple d'une vignette obtenue correspondant à une région d'intérêt.

La figure 4 schématise une architecture d'un réseau de neurones convolutif.

La figure 5 schématise un autre dispositif permettant une mise en œuvre de l'invention.

## EXPOSE DE MODES DE REALISATION PARTICULIERS

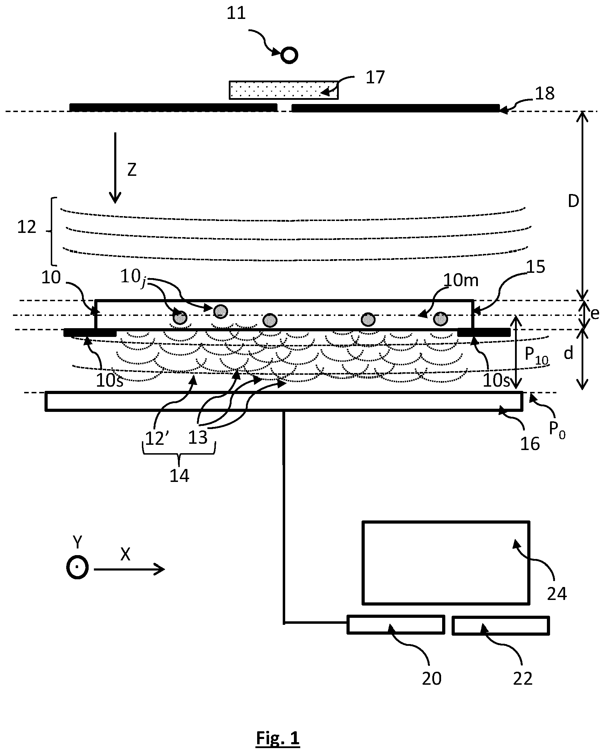

La figure 1 représente un exemple de dispositif selon l'invention. Une source de lumière 11 est apte à émettre une onde lumineuse 12, dite onde lumineuse incidente, se propageant en direction d'un échantillon 10, selon un axe de propagation Z. L'onde lumineuse est émise selon une bande spectrale d'illumination $\Delta\lambda$.

L'échantillon 10 est un échantillon que l'on souhaite caractériser. Il comprend notamment des particules $10_j$, dont certaines, voire toutes, sont des microorganismes. L'échantillon 10 peut comporter un milieu de culture $10_m$, permettant le développement de microorganismes. Il peut s'agir d'un milieu de culture liquide ou prenant la forme d'une gélose.

Un objectif de l'invention est d'évaluer une quantité de microorganismes se développant dans l'échantillon. Le terme quantité désigne un nombre ou une concentration. Par microorganisme, on entend notamment une levure, une bactérie, une spore, un champignon ou une cellule, qu'il s'agisse d'une cellule eucaryote ou procaryote, ou une microalgue.

Dans l'exemple représenté sur la figure 1, l'échantillon 10 est contenu dans une chambre 15. La chambre 15 peut avoir une épaisseur e, selon l'axe de propagation, variant typiquement entre 10 $\mu$m et 5 mm, et est de préférence comprise entre 20 $\mu$m et 500 $\mu$m. L'échantillon est maintenu sur un support 10s à une distance d d'un capteur d'image 16. La concentration de microorganismes peut varier entre 500 par microlitre et 5000 par microlitre.

La distance D entre la source de lumière 11 et la chambre 15 est de préférence supérieure à 1 cm. Elle est de préférence comprise entre 2 et 30 cm. Avantageusement, la source de lumière, vue par l'échantillon, est considérée comme ponctuelle. Cela signifie que son diamètre (ou sa diagonale) est préférentiellement inférieur au dixième, mieux au centième de la distance entre la chambre fluidique 15 et la source de lumière. Sur la figure 1, la source de lumière est une diode électroluminescente. Elle est généralement associée à diaphragme 18, ou filtre spatial. L'ouverture du diaphragme est typiquement comprise entre 5 $\mu$m et 1 mm, de préférence entre 50 $\mu$m et 500 $\mu$m. Dans cet exemple, le diaphragme est fourni par Thorlabs sous la référence P150S et son diamètre est de 150 $\mu$m. Le diaphragme peut être remplacé par une fibre optique, dont une première extrémité est placée face à la source de lumière 11 et dont une deuxième extrémité est placée en regard de l'échantillon 10. Le dispositif représenté sur la figure 1 comporte également un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par une source de lumière élémentaire 11 selon un cône d'angle a. De préférence, l'angle de diffusion a varie entre 10° et 80°. Alternativement, la source de lumière peut être une source laser, telle une diode laser. Dans ce cas, il n'est pas utile de lui associer un filtre spatial ou un diffuseur.

De préférence, la bande spectrale d'émission $\Delta\lambda$ de l'onde lumineuse incidente 12 a une largeur inférieure à 100 nm. Par largeur de bande spectrale, on entend une largeur à mi-hauteur de ladite bande spectrale.

L'échantillon 10 est disposé entre la source de lumière 11 et le capteur d'image 16 précédemment évoqué. Ce dernier s'étend de préférence parallèlement, ou sensiblement parallèlement au plan $P_{10}$ selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise. Dans cet exemple, l'échantillon s'étend selon un plan XY, perpendiculaire à l'axe de propagation Z.

Le capteur d'image 16 est apte à former une image $I_0$ de l'échantillon 10 selon un plan de détection $P_0$. Dans l'exemple représenté, il s'agit d'un capteur d'image comportant une matrice de pixels, de type CCD ou un CMOS. Le plan de détection $P_0$ s'étend de préférence perpendiculairement à l'axe de propagation Z de l'onde lumineuse incidente 12. La distance d entre l'échantillon 10 et la matrice de pixels du capteur d'image 16 est préférentiellement comprise entre 50 $\mu$m et 2 cm, de préférence comprise entre 100 $\mu$m et 2 mm.

On remarque, dans ce mode de réalisation, l'absence d'optique de grossissement ou de formation d'image entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image, leur fonction étant d'optimiser l'efficacité de détection.

Sous l'effet de l'onde lumineuse incidente 12, les particules $10_j$ présentes dans l'échantillon peuvent engendrer une onde diffractée 13, susceptible de produire, au niveau du plan de détection $P_0$, des interférences, en particulier avec une partie de l'onde lumineuse incidente 12' transmise par l'échantillon. Par ailleurs, l'échantillon peut absorber une partie de l'onde lumineuse incidente 12. Ainsi, l'onde lumineuse 14, transmise par l'échantillon, et à laquelle est exposé le capteur d'image 16, désignée par le terme "onde d'exposition", peut comprendre :

- une composante 13 résultant de la diffraction de l'onde lumineuse incidente 12 par les particules présentes dans l'échantillon ;
- une composante 12' résultant de la transmission de l'onde lumineuse incidente 12 par l'échantillon, une partie de cette dernière pouvant être absorbée dans l'échantillon.

Ces composantes forment des interférences dans le plan de détection. Aussi, l'image acquise par le capteur d'image comporte des figures d'interférences (ou figures de diffraction). Cette image forme un hologramme, qui est une signature du contenu de l'échantillon, et de son évolution dans le temps.

Un processeur 20, par exemple un microprocesseur, est apte à traiter chaque image $I_0$ acquise par le capteur d'image 16. En particulier, le processeur est un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

Une image $I_0$ acquise par le capteur d'image 16, également appelée hologramme. Dans certaines configurations, par exemple lorsque la concentration de microorganismes dans l'échantillon est élevée, l'image acquise ne permet pas d'obtenir une représentation suffisamment précise de l'échantillon observé. En effet, dans la configuration sans lentille, l'image acquise par le capteur d'image est non focalisée. Lorsque la concentration des microorganismes augmente, les figures de diffraction élémentaires formées par les différents microorganismes se chevauchent. On peut appliquer, à chaque image $I_0$ acquise par le capteur d'image, un opérateur de propagation holographique $h$, de façon à calculer une grandeur représentative de l'onde lumineuse d'exposition 14. Il est alors possible de reconstruire une expression complexe $A$ de l'onde lumineuse 14 en tout point de coordonnées $(x, y, z)$ de l'espace, et en particulier dans un plan de reconstruction $P_z$ situé à une distance $|z|$ du capteur d'image 16, dite distance de reconstruction. Ce plan de reconstruction est de préférence le plan $P_{10}$ selon lequel s'étend l'échantillon, avec :

$$A(x, y, z) = I_0(x, y, z) * h$$

* désignant l'opérateur produit de convolution.

L'opérateur de propagation $h$ a pour fonction de décrire la propagation de la lumière entre le capteur d'image 16 et un point de coordonnées $(x,y,z)$, situé à une distance $|z|$ du capteur d'image. Il est alors possible de déterminer le module $M(x, y, z)$ et/ou la phase $\varphi(x, y, z)$ l'onde lumineuse 14, en un point de l'espace de coordonnées $(x, y, z)$, avec :

$$M(x, y, z) = abs\,[A(x, y, z)]\,;$$

$$\varphi(x, y, z) = arg\,[A(x, y, z)].$$

Les opérateurs *abs* et *arg* désignent respectivement le module et l'argument.

L'opérateur de propagation est par exemple la fonction de Fresnel-Helmholtz, telle que :

$$h(x, y, z) = \frac{1}{j\lambda z} e^{j2\pi\frac{z}{\lambda}} \exp\left(j\pi \frac{x^2 + y^2}{\lambda z}\right)$$

avec $j^2 = -1$.

Autrement dit, l'expression complexe $A(x, y, z)$ de l'onde lumineuse 14, à un instant, en tout point de coordonnées $(x, y, z)$ de l'espace, est telle que :

$$A(x, y, z) = M(x, y, z)e^{j\varphi(x, y, z)}$$

Dans la suite de cette description, les coordonnées $(x, y)$ désignent une position dans un plan $P_{XY}$ perpendiculaire à l'axe de propagation Z. La coordonnée $z$ désigne une coordonnée selon l'axe de propagation Z.

L'expression complexe $A(x, y, z)$ est une grandeur complexe dont l'argument et le module sont respectivement représentatifs de la phase et de l'intensité de l'onde lumineuse 14 d'exposition détectée par le capteur d'image 16. Le produit de convolution de l'image $I_0$ par l'opérateur de propagation $h$ permet d'obtenir une image complexe $A$ représentant une distribution spatiale de l'expression complexe de $A(x, y, z)$ dans le plan de reconstruction considéré. De préférence, ce dernier est le plan $P_{10}$ selon lequel s'étend l'échantillon.

L'obtention d'une image complexe peut s'accompagner d'un bruit de reconstruction important, usuellement désigné par le terme « twin image ». Des algorithmes itératifs ont été décrits, permettant d'obtenir, par reconstruction holographique, une image complexe $A_i$ tout en minimisant le bruit de reconstruction. L'homme du métier pourra se référer à des algorithmes décrits dans des documents publiés, par exemple dans le document WO2017162985 (étapes 100 à 170) ou dans le document WO2016189257 (étapes 100 à 500).

Le capteur d'image 16 peut acquérir une image $I_{0,i}$ de l'échantillon à un instant ou à différents instants de mesure $t_i$. A partir de chaque image acquise à un instant de mesure $t_i$, on peut calculer une image complexe $A_i$, dans un plan de reconstruction, qui correspond par exemple à un plan $P_{10}$ dans lequel s'étend l'échantillon. A partir de l'image complexe $A_i$, on peut obtenir une image $I_i$, représentative de l'échantillon, en considérant par exemple le module, et/ou la phase, et/ou la partie réelle, et/ou la partie imaginaire de l'image complexe $A_i$. Chaque image $I_i$ est associée à l'instant de mesure $t_i$. $i$ est un entier indexant chaque instant de mesure.

Les inventeurs ont acquis, à différents instants de mesure $t_i$, des images $I_{0,i}$ d'un échantillon comportant des levures de type *Saccharomyces cerevisiae* baignant dans un milieu de culture de type YPD (Yeast Peptone Dextrose). Ces images ont été acquises selon les paramètres expérimentaux suivants :

- source de lumière : LED à cadrans RGB Cree MC-E Color ;
- capteur d'image : capteur CMOS monochrome IDS UI-1492LE-M — 3840 × 2748 pixels ;
- distance capteur d'image - échantillon : 1 mm ;
- distance source de lumière - échantillon : 5 cm.

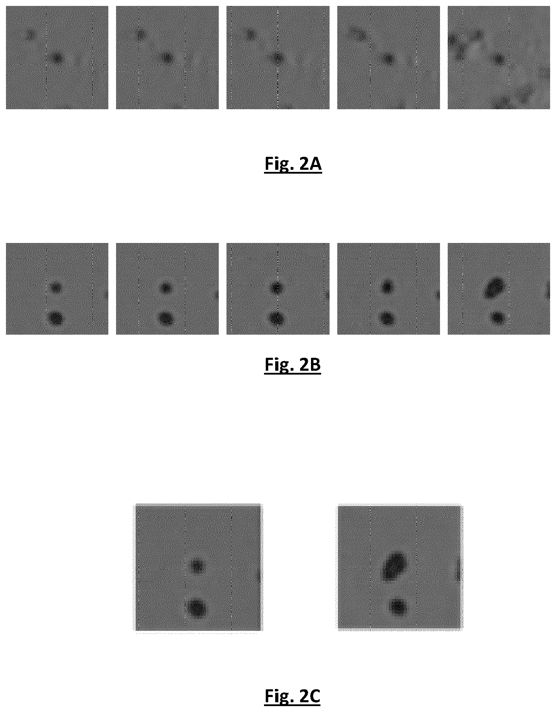

Les images $I_{0,i}$ ont été acquises à un instant de mesure initial $t_0$, puis à des instants de mesure $t_1$, $t_2$, $t_3$ et $t_4$. Deux instants de mesures successifs étaient espacés de 2 heures : $t_i = t_{i-1} + 2$. A partir de chaque image acquise $I_{0,i}$, on a formé une image complexe $A_i$, comme précédemment décrit. On a calculé le module de chaque image complexe, de façon à obtenir des images d'observation $I_i$ de l'échantillon 10 à chaque instant de mesure $t_i$. Les figures 2A et 2B sont des vignettes extraites de chaque image d'observation $I_i$, $(0 \leq i \leq 5)$ dans deux parties de l'image, respectivement centrées sur deux levures différentes. La dimension de chaque vignette est de 30 pixels par 30 pixels. La figure 2A montre une série de 5 vignettes d'une même partie de chaque image $I_i$, centrée sur une levure ne se développant pas dans le milieu de culture. La figure 2B montre une série de 5 vignettes d'une même partie de chaque image $I_i$, centrée sur une levure se développant progressivement. Sur la figure 2B, on constate que la forme de la levure, au centre de l'image, évolue, sous l'effet de son développement.

Les inventeurs ont conçu un procédé permettant de détecter et de dénombrer des microorganismes se développant dans un échantillon. Par se développer, on entend se multiplier, de façon à former des amas ou des colonies.

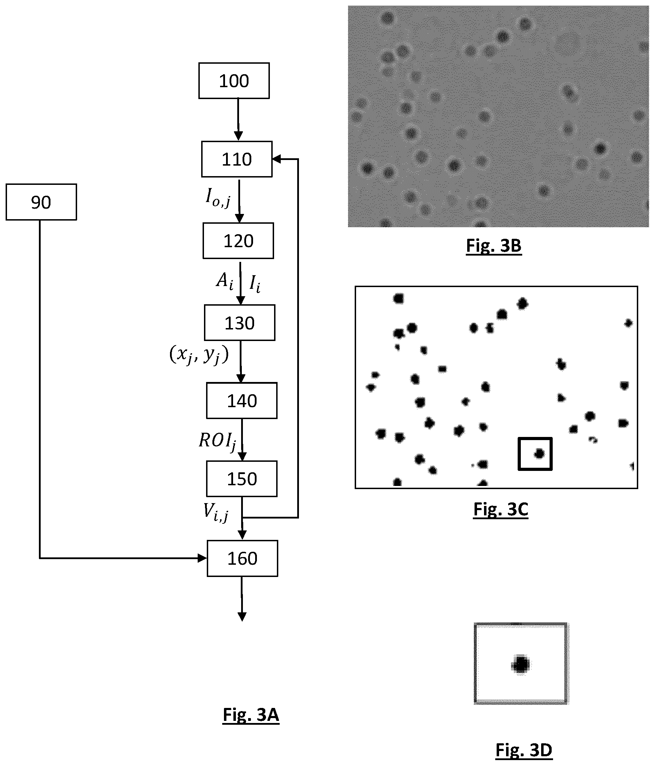

Les principales étapes du procédé sont décrites sur la figure 3A.

Etape 100 : Disposition de l'échantillon sur le support.

L'échantillon est disposé sur le support 10s, dans le champ d'observation du capteur d'image. Il est ensuite illuminé par la source de lumière 11.

Etape 110 : Acquisition d'une image de l'échantillon à un instant de mesure $t_i$. Au cours de cette étape, une image $I_{0,i}$ de l'échantillon est acquise.

Etape 120 : Obtention d'une image de l'échantillon.

A partir de l'image acquise, on obtient une image de l'échantillon $I_i$, dite image d'observation de l'échantillon car elle permet une observation précise de l'échantillon. Comme précédemment décrit, l'image de l'échantillon $I_i$ peut être obtenue à partir d'une reconstruction holographique de l'image acquise, dans un plan de reconstruction. Dans cet exemple, l'image $I_i$ est une image du module d'une image complexe reconstruite dans le plan de l'échantillon, comme décrit en lien avec les figures 2A et 2B. La figure 3B représente une telle image. Selon d'autres possibilités, l'image est une image établie à partir la phase d'une image complexe reconstruite, ou de la partie réelle ou de la partie imaginaire de l'image complexe reconstruite.

Etape 130 : Détection et localisation de particules

Au cours de cette étape, à partir de l'image $I_i$, de l'échantillon, on effectue une détection de particules $10_j$ susceptibles de correspondre à un microorganisme se développant dans l'échantillon. Cette étape peut être effectuée manuellement ou automatiquement, par un traitement d'image approprié. Il peut par exemple s'agir d'une binarisation. La figure 3C représente la figure 3B après binarisation établie selon la méthode d'Otsu, connue de l'homme du métier. Sur cette image, chaque tache sombre est une particule $10_j$ susceptible de correspondre à un microorganisme ou à une colonie de microorganismes, dont on peut déterminer une position. La position correspond par exemple aux coordonnées cartésiennes d'un centroïde ($x_j$, $y_j$) de chaque tache.

Etape 140 : Définition de régions d'intérêt $ROI_j$.

Au cours de cette étape, des régions d'intérêt $ROI_j$ sont définies autour de chaque position ($x_j$, $y_j$) définie lors de l'étape 130, correspondant à une particule $10_j$. Chaque région d'intérêt a une forme prédéterminée. Dans cet exemple, chaque région d'intérêt est un carré de 30 pixels de côté. De préférence, chaque région d'intérêt est centrée sur chaque position ($x_j$, $y_j$). La définition des dimensions des régions d'intérêt $ROI_j$ peut être effectuée préalablement, par exemple sur la base d'essais expérimentaux.

Etape 150 : Extraction de vignettes.

Au cours de cette étape, on définit une vignette $V_{i,j}$ correspondant à une partie de l'image $I_i$ dans chaque région d'intérêt $ROI_j$ définie au cours de l'étape 140. La figure 3D représente un exemple d'une vignette obtenue correspondant à une région d'intérêt matérialisée par un cadre sur la figure 3C. Une vignette peut par exemple comporter quelques dizaines voire quelques centaines de pixels, typiquement entre 50 et 5000 pixels. Dans cet exemple, une vignette comporte $30 \times 30$ pixels. Du fait de la taille, une vignette peut comporter plusieurs particules à caractériser. Cependant, seule la particule au centre de la vignette est caractérisée en utilisant ladite vignette. Plus généralement, une particule à caractériser occupe une position prédéfinie dans la vignette, et de préférence au centre de la vignette. La position centrale de la particule à caractériser n'est pas nécessaire. Le procédé n'impose pas d'isoler la particule à caractériser dans une vignette. La caractérisation d'une particule peut être effectuée alors que d'autres particules sont dans la même vignette, sous réserve que la position de la particule à caractériser dans la vignette soit connue.

Les étapes 110 à 150 peuvent être réitérées sur la base de plusieurs images $I_{0,i}$ de l'échantillon acquises à différents instants de mesure $t_i$. On obtient alors, pour une même particule $10_j$ une série de vignettes $V_{i,j}$ comportant autant de vignettes que d'images acquises. Dans ce cas, l'étape 130 peut n'être effectuée qu'une seule fois, par exemple sur l'image $I_i$ formée au cours de la première itération. Les positions ($x_j$, $y_j$) déterminées lors de l'étape 130 sont utilisées pour extraire les vignettes des autres images.

Etape 160 : Classification de chaque microorganisme détecté.

Au cours de cette étape, la vignette $V_{i,j}$, ou la série de vignettes $V_{i,j}$, correspondant à une même particule $10_j$ forme une donnée d'entrée d'un algorithme d'intelligence artificielle à apprentissage supervisé. Par exemple, l'algorithme est un réseau de neurones convolutifs CNN, dont la couche de sortie OUT permet de déterminer si la particule $10_j$ est un microorganisme se développant dans l'échantillon.

L'algorithme d'intelligence artificielle peut être mis en œuvre sur la base d'une seule image acquise $I_{0,i}$ acquise à un instant de mesure $t_i$. A chaque particule $10_j$ détectée dans l'image $I_i$ correspond une seule vignette $V_{i,j}$.

Selon une autre possibilité, l'algorithme d'intelligence artificielle est mis en œuvre en utilisant des images de l'échantillon acquises à différents instants de mesure $t_i$, $t_{i+1}$.... Par exemple, on peut utiliser deux images de l'échantillon acquises dans un intervalle temporel compris entre 1 heure et 10 heures. Sur la figure 2C, on a représenté deux vignettes, centrées sur une même particule, et résultant d'images de l'échantillon décalées de 8 heures.

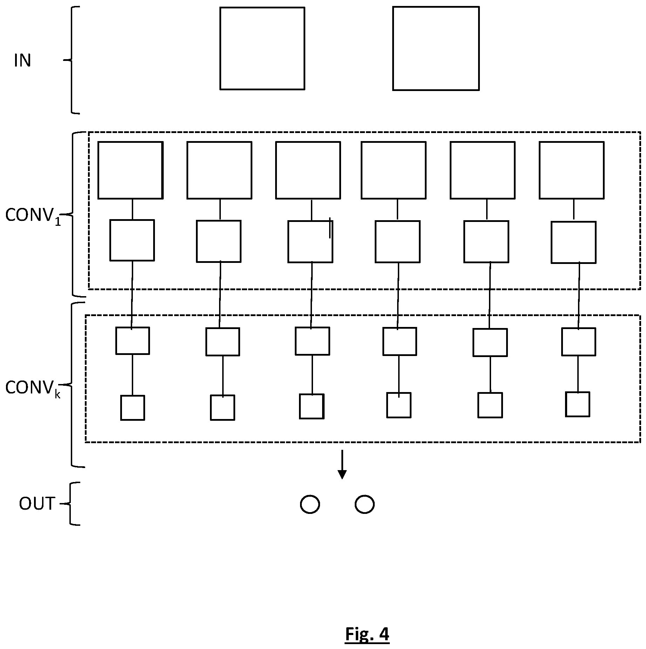

La figure 4 schématise une structure, comportant différentes couches, d'un réseau de neurones convolutifs. Un tel réseau est connu de l'homme du métier. Il est par exemple décrit dans Karpathy "Large-scale video classification with convolutional neural networks", 2014 IEEE Conférence on Computer Vision and Pattern Récognition. De façon connue en soi, le réseau de neurones convolutif comporte :

- une couche d'entrée IN : cette couche est formée par une vignette $V_{i,j}$ ou une série de vignettes $V_{i,j}$.
- plusieurs couches de convolution $CONV_1...CONV_k$. Chaque couche de convolution comporte un premier niveau, obtenu par convolution des images résultant d'une couche précédente. Dans cet exemple, la taille du filtre est $3 \times 3$. Les paramètres de chaque filtre sont établis lors d'une phase d'apprentissage décrite par la suite. La fonction de la succession de couches de convolution est d'extraire des caractéristiques pertinentes relativement au critère de classification considéré. Dans le cas présent, le critère de classification consiste à estimer si la particule $10_j$, associée à une vignette $V_{i,j}$ ou une série de vignettes $V_{i,j}$, est un microorganisme se développant dans l'échantillon.

- une couche de sortie OUT, combinant les informations contenues dans la dernière couche de convolution, de façon à classifier la particule $10_j$. La couche de sortie est dite entièrement connectée « fully connected », car elle combine les caractéristiques résultant de la dernière couche $CONV_k$. La couche de sortie comporte un label, correspondant à une classification de la vignettes (ou série de vignettes) formant la couche d'entrée selon deux classes :

    o la vignette (ou série de vignettes) correspond à un microorganisme se développant ;
    o la vignette (ou série de vignettes) correspond à un autre type de particule.

Entre deux couches de convolution successives, les images formant le premier niveau d'une couche peuvent faire l'objet de transformations, de façon effectuer un tri et/ou réduire la dimension. De telles transformations peuvent comprendre :

- un « pooling » (compression) : il s'agit de remplacer les valeurs d'un groupe de pixels par une seule valeur, par exemple le moyenne, ou la valeur maximale, ou la valeur minimale du groupe considéré. Dans cet exemple, on applique un "max pooling", ce qui correspond au remplacement des valeurs de groupes de pixels de 2 par 2 par la valeur maximale dans le groupe.
- une rectification linéaire, usuellement désigné "RELU", permettant notamment de supprimer certaines valeurs des images du premier niveau. On peut par exemple supprimer les valeurs négatives en les remplaçant par la valeur 0.
- une normalisation par lot, usuellement désignée par le terme « Batchnorm ».
- une application d'un abandon, usuellement désigné « Dropout », qui consiste à retirer, de façon probabiliste, certaines valeurs, afin d'éviter un surapprentissage.

Le réseau de neurones convolutif a préalablement fait l'objet d'un apprentissage (étape 90), de façon à déterminer les paramètres des filtres de convolution mis en œuvre dans les couches de convolution ainsi que les paramètres de combinaison permettant de former la couche de sortie à partir de la dernière couche de convolution. L'apprentissage est effectuée sur la base de vignettes, ou de séries de vignettes, correspondant à des particules connues, et comportant notamment des microorganismes se développant dans un échantillon.

Essais expérimentaux.

Les inventeurs ont testé le procédé tel que précédemment décrit en paramétrant quatre réseaux convolutifs $CNN_1$, $CNN_2$, $CNN_3$, $CNN_4$, chaque réseau convolutif étant paramétré par des données d'entrée différentes. Ces données d'entrée sont :

- soit une vignette $V_{i,j}$ par particule $10_j$, ce qui a permis la constitution d'un premier réseau de neurones convolutif $CNN_1$ ;
- soit une série de deux vignettes $V_{i,j}$ $V_{i+1,j}$ par particule $10_j$, respectivement établies sur la base de deux images $I_{0,i}$, $I_{0,i+1}$ acquises à des instants d'acquisition respectivement décalées de 2 heures (réseau convolutif $CNN_2$), de 4 heures (réseau convolutif $CNN_3$), ou de 6 heures (réseau convolutif $CNN_4$).

Chaque réseau de neurones a fait l'objet d'un apprentissage basé sur 50000 vignettes, ou séries de deux vignettes, dites annotées, comprenant :

- 25000 vignettes (ou séries de deux vignettes) correspondant à des levures *Saccharomyces cerevisiae* se développant dans un milieu de culture YPD;
- 25000 autres vignettes, (ou séries de deux vignettes) correspondant à d'autres particules, notamment des levures ne se développant pas.

Le premier réseau de neurones $CNN_1$, dont la couche d'entrée comporte une seule vignette, comportait 2 couches de convolution. Le deuxième réseau de neurones $CNN_2$, dont la couche d'entrée comporte une série de deux vignettes « temporellement décalées » de deux heures, comportait 3 couches de convolution. Les troisième et quatrième réseaux de neurones $CNN_3$, $CNN_4$, dont la couche d'entrée comporte une série de deux vignettes « temporellement décalées » de quatre heures et six heures, respectivement, comportait 3 couches de convolution, de façon identique au deuxième réseau de neurones. Quel que soit le réseau de neurones, la taille des noyaux de convolution était de 3 par 3. Le premier réseau de neurones $CNN_1$ mettait en œuvre 16 filtres par couche. Les réseaux de neurones $CNN_2$, $CNN_3$ et $CNN_4$ mettaient en œuvre 16 filtres sur les deux premières couches, et 32 filtres sur la dernière couche.

Suite à l'apprentissage, chaque réseau de neurones a fait l'objet d'une phase de test, afin d'évaluer la performance de classification. La phase de test a été mise en œuvre en en utilisant 25000 vignettes (ou séries de deux vignettes) annotées non utilisées lors de la phase d'apprentissage.

Le tableau 1 rassemble des performances de classification issues de la phase de test, correspondant au pourcentage de classification correcte.

Tableau 1

| Réseau de neurones utilisé | Performance de classification |
|---|---|
| $CNN_1$ | 71% |
| $CNN_2$ | 86% |
| $CNN_3$ | 88% |
| $CNN_4$ | 91% |

Le tableau 1 montre que les meilleures performances en terme de classification sont obtenues en utilisant des vignettes issues d'images de l'échantillon temporellement décalées de 6h. Cependant, les performances de classification obtenues en utilisant des vignettes issues d'image temporellement décalées de 2h ou 4h sont jugées très satisfaisantes. En utilisant une donnée d'entrée formée d'une vignette extraite à partir d'une seule image, la performance de classification est moindre, mais reste à un niveau convenable. Les inventeurs estiment qu'en utilisant une seule vignette par levure, le réseau de neurones $CNN_1$ a identifié des caractéristiques selon lesquelles chaque levure est non viable ou viable mais ne se divise pas

Les essais montrent qu'il est possible de caractériser l'aptitude de microorganismes à se développer dans un échantillon sur la base d'une seule image ou sur la base d'uniquement deux images, voire plus de deux images.

Selon une variante, l'image $I_i$, est l'image $I_{0,i}$ acquise par le capteur d'image, et ne fait pas l'objet d'une reconstruction holographique. Chaque microorganisme apparaît sous la forme d'une figure de diffraction. Ce mode de réalisation convient lorsque la concentration en microorganismes dans l'échantillon n'est pas trop importante.

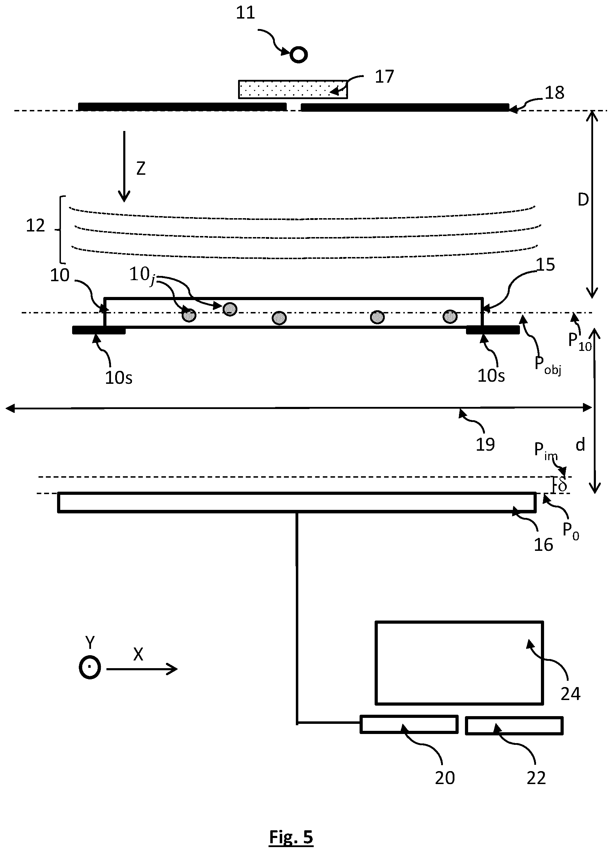

Selon un mode de réalisation, une optique de formation d'image est disposée entre l'échantillon et le capteur d'image. Selon une variante, illustrée sur la figure 5, le dispositif comporte un système optique 19, définissant un plan objet $P_{obj}$ et un plan image $P_{im}$. Le capteur d'image 16 est alors disposé selon une configuration dite défocalisée, selon laquelle l'échantillon s'étend selon un plan décalé par rapport au plan objet, et/ou le capteur d'image s'étend selon un plan décalé par rapport au plan image. Par configuration défocalisée, on entend une configuration comportant un décalage de l'échantillon et/ou du capteur d'image par rapport à une configuration de mise au point, selon laquelle le plan de détection $P_0$ est conjugué d'un plan $P_{10}$ selon lequel s'étend l'échantillon. Le décalage $\delta$ est de préférence inférieur à 500 $\mu m$, voire à 200 $\mu m$. Il est de préférence supérieur à 10 $\mu m$ ou 20 $\mu m$. De la même manière qu'en configuration sans lentille, une telle configuration permet l'obtention d'une image dans laquelle chaque microorganisme apparaît sous la forme d'une figure de diffraction, des interférences se produisant entre l'onde lumineuse émise par la source de lumière et se propageant jusqu'au capteur d'image et une onde de diffraction générée par chaque particule de l'échantillon. Dans l'exemple représenté sur la figure 5, le plan objet $P_{obj}$ est confondu avec un plan $P_{10}$ selon lequel s'étend l'échantillon et le plan image $P_{im}$ est décalé par rapport au plan de détection $P_0$ selon un décalage $\delta$. Le procédé décrit en lien avec les étapes 100 à 160 est applicable à des images acquises selon une telle configuration. Toutefois, une configuration en imagerie sans lentille est préférée, par le plus grand champ d'observation qu'elle procure. Selon une autre variante, le plan de détection est confondu avec le plan image et le plan de l'échantillon est décalé par rapport au plan objet. Selon une autre variante, le plan image est décalé du plan de détection et le plan objet est décalé du plan de l'échantillon. Chaque image est ainsi acquise selon une configuration focalisée.

L'invention peut être mise en œuvre, de façon non limitative, dans le domaine de l'agroalimentaire, ou dans le contrôle de procédés industriels, dans le contrôle de l'environnement, ou encore dans le domaine de la microbiologie ou du diagnostic clinique. de la biologie, ou dans le contrôle de l'environnement, ou encore dans le domaine de l'agroalimentaire ou du contrôle de procédés industriels.

**Revendications**

1. Procédé de caractérisation d'un échantillon, comportant des microorganismes disposés au contact d'un milieu propice à leur développement, le procédé comportant les étapes suivantes :

a) illumination de l'échantillon (10) par une source de lumière (11);
b) à l'aide d'un capteur d'image (16), obtention d'au moins d'une image de l'échantillon ($I_i$), représentant l'échan-

tillon à un instant de mesure ($t_i$);

c) détection d'une particule ($10_j$), susceptible d'être un microorganisme, sur l'image de l'échantillon, et détermination d'une position ($x_j$, $y_j$) de la particule dans l'image de l'échantillon.

d) définition d'une région d'intérêt ($ROI_j$) dans l'image de l'échantillon, s'étendant autour de la position ($x_j$, $y_j$) de la particule détectée lors de l'étape c) ;

e) formation d'une vignette ($V_{i,j}$), correspondant à une partie de l'image de l'échantillon dans la région d'intérêt définie dans l'étape d) ;

f) utilisation de la vignette formée dans l'étape e) en tant que donnée d'entrée d'un algorithme d'intelligence artificielle supervisé ($CNN_1$, $CNN_2$, $CNN_3$, $CNN_4$);

g) à partir de l'algorithme d'intelligence artificielle supervisé, détermination de l'appartenance ou de la non appartenance de la particule à une classe rassemblant chaque microorganisme se développant dans l'échantillon ;

le procédé étant **caractérisé en ce que** :

- l'étape b) comporte une obtention d'une seule image de l'échantillon ou de deux images de l'échantillon ($I_i$) respectivement à différents instants de mesure ;
- les étapes c) à e) sont mises en œuvre pour chaque image de l'échantillon, de façon à obtenir, pour une même particule ($10_j$), une seule vignette, ou deux vignettes ($V_{i,j}$) respectivement formées à partir des images de l'échantillon obtenues lors de l'étape b) ;
- lors de l'étape f), on utilise une seule vignette ou uniquement deux vignettes correspondant à une même particule ($10_j$) en tant que donnée d'entrée de l'algorithme d'intelligence artificielle supervisé.

2. Procédé selon la revendication 1, dans lequel lors de l'étape d), la région d'intérêt ($ROI_j$) est centrée par rapport à la position ($x_j$, $y_j$) déterminée lors de l'étape c).

3. Procédé selon l'une quelconque des revendications précédentes, dans lequel l'étape c) comporte une détection de plusieurs particules, les étapes d) à g) étant mises en œuvre pour chaque particule détectée.

4. Procédé selon l'une quelconque des revendications précédentes :

- l'étape b) comporte une obtention d'au moins deux images de l'échantillon à deux instants de mesure espacés d'un intervalle temporel compris entre 1 heure et 10 heures ;
- lors de l'étape f), on utilise une série d'au moins deux vignettes en tant que donnée d'entrée de l'algorithme d'intelligence artificielle supervisé.

5. Procédé selon l'une quelconque des revendications précédentes, dans lequel l'échantillon est disposé entre la source de lumière et le capteur d'image.

6. Procédé selon la revendication 5, dans lequel aucune optique de formation d'image n'est disposé entre l'échantillon et le capteur d'image.

7. Procédé selon la revendication 6, dans lequel un système optique (19) s'étend entre l'échantillon et le capteur d'image, le système optique définissant un plan objet ($P_{obj}$) et un plan image ($P_{im}$), le procédé étant tel que :

- le capteur d'image définit un plan de détection ($P_0$), le plan de détection étant décalé par rapport au plan image ($P_{im}$);
- et/ou l'échantillon définit un plan d'échantillon ($P_{10}$), le plan d'échantillon étant décalé par rapport au plan objet ($P_{obj}$).

8. Procédé selon l'une quelconque des revendications 6 ou 7, dans lequel l'étape b) comporte, à chaque instant de mesure ($t_i$):

- b-i) acquisition d'une image par le capteur d'image ($I_{0,i}$), à l'instant de mesure ;
- b-ii) application d'un opérateur de reconstruction holographique à l'image acquise ($I_{0,i}$) de façon à obtenir une image complexe ($A_i$) dans un plan de reconstruction ;
- b-iii) obtention de l'image de l'échantillon ($I_i$), à l'instant de mesure, à partir de l'image complexe ($A_i$) résultant de la sous-étape b-ii).

9. Procédé selon la revendication 8, dans lequel l'image de l'échantillon est obtenue à partir du module ou de la phase ou de la partie réelle ou de la partie imaginaire de l'image complexe ($A_i$) obtenue au cours de la sous-étape b-ii).

10. Procédé selon l'une quelconque des revendications précédentes, dans lequel l'algorithme d'intelligence artificielle supervisé est un réseau de neurones.

11. Procédé selon la revendication 10, dans lequel le réseau de neurones est un réseau de neurones convolutifs.

12. Dispositif de caractérisation d'un échantillon, l'échantillon comportant des microorganismes, le dispositif comportant :

   - une source de lumière (11);
   - un capteur d'image (16);
   - un support (10s), configuré pour maintenir l'échantillon ;
   - un processeur, programmé pour mettre en œuvre les étapes c) à g) du procédé selon l'une quelconque des revendications précédentes.

**Fig. 1**

**Fig. 2A**

**Fig. 2B**

**Fig. 2C**

**Fig. 3B**

**Fig. 3C**

**Fig. 3A**

**Fig. 3D**

**Fig. 4**

**Fig. 5**

Europäisches
Patentamt

European
Patent Office

Office européen
des brevets

# RAPPORT DE RECHERCHE EUROPEENNE

Numéro de la demande

**EP 21 20 1607**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | HONGDA WANG ET AL: "Early-detection and classification of live bacteria using time-lapse coherent imaging and deep learning", ARXIV.ORG, CORNELL UNIVERSITY LIBRARY, 201 OLIN LIBRARY CORNELL UNIVERSITY ITHACA, NY 14853, 29 janvier 2020 (2020-01-29), XP081587853, * le document en entier * ----- | 1-12 | INV. G06V20/69 G01N15/14 G01N15/10 |
| X | US 2019/294108 A1 (OZCAN AYDOGAN [US] ET AL) 26 septembre 2019 (2019-09-26) * le document en entier * ----- | 1-12 | |
| X | WO 2020/102546 A1 (UNIV CALIFORNIA [US]) 22 mai 2020 (2020-05-22) * le document en entier * ----- | 1-12 | |
| X | WO 2020/082030 A1 (UNIV CALIFORNIA [US]) 23 avril 2020 (2020-04-23) * le document en entier * ----- | 1-12 | DOMAINES TECHNIQUES RECHERCHES (IPC) G06K G01N |

Le présent rapport a été établi pour toutes les revendications

| Lieu de la recherche | Date d'achèvement de la recherche | Examinateur |
|---|---|---|
| La Haye | 28 janvier 2022 | Grigorescu, Cosmin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P04C02)

# EP 3 982 334 A1

| Document brevet cité au rapport de recherche | | Date de publication | Membre(s) de la famille de brevet(s) | | Date de publication |
|---|---|---|---|---|---|
| US 2019294108 | A1 | 26-09-2019 | AUCUN | | |
| WO 2020102546 | A1 | 22-05-2020 | CN | 113039493 A | 25-06-2021 |
| | | | EP | 3881137 A1 | 22-09-2021 |
| | | | US | 2022012850 A1 | 13-01-2022 |
| | | | WO | 2020102546 A1 | 22-05-2020 |
| WO 2020082030 | A1 | 23-04-2020 | CN | 113167783 A | 23-07-2021 |
| | | | EP | 3867637 A1 | 25-08-2021 |
| | | | US | 2021374381 A1 | 02-12-2021 |
| | | | WO | 2020082030 A1 | 23-04-2020 |

EPO FORM P0460

## RÉFÉRENCES CITÉES DANS LA DESCRIPTION

**Documents brevets cités dans la description**

- WO 2018215337 A
- EP 3462381 A
- US 20190294108 A
- WO 2020102546 A
- WO 2020082030 A
- WO 2017162985 A
- WO 2016189257 A

**Littérature non-brevet citée dans la description**

- **KARPATHY.** Large-scale video classification with convolutional neural networks. *IEEE Conférence on Computer Vision and Pattern Récognition,* 2014